(19) Europäisches Patentamt
European Patent Office
Office européen des brevets

(11) **EP 2 118 157 B1**

(12) **EUROPÄISCHE PATENTSCHRIFT**

(45) Veröffentlichungstag und Bekanntmachung des Hinweises auf die Patenterteilung:
**25.05.2011 Patentblatt 2011/21**

(21) Anmeldenummer: **08701667.1**

(22) Anmeldetag: **25.01.2008**

(51) Int Cl.:
*C08F 283/12* (2006.01)  *C08F 2/22* (2006.01)

(86) Internationale Anmeldenummer:
**PCT/EP2008/050861**

(87) Internationale Veröffentlichungsnummer:
**WO 2008/098825 (21.08.2008 Gazette 2008/34)**

(54) **REDISPERGIERBARE KERN-SCHALE POLYMERE UND EIN VERFAHREN ZU DEREN HERSTELLUNG**

REDISPERSIBLE CORE-SHELL POLYMERS AND A PROCESS FOR PREPARING THEM

POLYMÈRES COEUR-ÉCORCE REDISPERSIBLES ET PROCÉDÉ DE PRODUCTION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.02.2007 DE 102007007336**

(43) Veröffentlichungstag der Anmeldung:
**18.11.2009 Patentblatt 2009/47**

(73) Patentinhaber: **Wacker Chemie AG**
**81737 München (DE)**

(72) Erfinder:
• **SCHÄFER, Oliver**
**84489 Burghausen (DE)**
• **OSWALDBAUER, Helmut**
**94166 Stubenberg (DE)**
• **BAUER, Christina**
**84359 Simbach am Inn (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A- 0 407 799    EP-A- 0 492 376**
**WO-A-03/066695    WO-A-2006/037559**

**Beschreibung**

Die Erfindung betrifft elastomere teilchenförmige Kern-Hülle Copolymerisate, welche zusammengesetzt sind aus einem Kern-Organopolysiloxanpolymeren A, einer Polydialkylsiloxan-Hülle B und einer Hülle D aus Organopolymer monoolefinisch ungesättigter Monomere und ein Verfahren zu deren Herstellung.

Pfropfcopolymerisate mit Kern-Hülle-Struktur, zusammengesetzt aus einem siliziumorganischen Polymer und einer Pfropfkette, die eine Hülle um das Kautschukteilchen bildet, und deren Herstellung sind aus einer Reihe von Publikationen, beispielsweise EP 1101799 bekannt.

All die beschriebenen Verfahren haben jedoch den Nachteil, dass die Herstellung der Pulver im Allgemeinen über Fällungsreaktionen geschieht, so dass die isolierten Pulver nicht nur eine erhöhte Salzbelastung aufweisen, sondern auch nicht mehr in Lösungsmittel, organischen Harzsystemen wie z. B. Epoxydharzen oder thermoplastischen Polyestern vollständig redispergierbar sind.

In Wasser oder wässrigen Systemen redispergierbare Pfropfcopoylmerisate mit Kern-Hülle Struktur sind ebenfalls bekannt und werden für gewöhnlich zur Modifizierung von zementären Systemen eingesetzt.

Die beschriebenen Verfahren haben hier ebenfalls den Nachteil, dass bei diesen Materialien eine Redispergierung in organischen Medien nicht möglich ist.

Es wurde daher nach einer Lösung gesucht, in organischen Medien redispergierbare Pulver von Kern-Schale Polymerisaten, zusammengesetzt aus einem elastischen Kern A bestehend aus einem siliziumorganischen Polymer und einer organopolymeren Hülle D oder gegebenenfalls zwei weiteren inneren Hüllen B und C, wobei die innere Hülle B aus einem siliciumorganischen Polymer und die Hülle C aus einem organischen Polymer besteht und die Polymerisate eine definierte Teilchengröße aufweisen, herzustellen.

Es wird dabei bevorzugt, dass die im Kern liegende Kautschukphase ein Siliconkautschuk oder die Mischung eines Silikonkautschukes mit einem organischen Kautschuk wie z.B. einem Dienkautschuk, Fluorkautschuk, Acrylatkautschuk ist und der Kern zu mindestens 40 Gew.% aus einer Kautschukphase bestehen muss. Besonders bevorzugt ist dabei ein Kern, der zu mindestens 50 % aus einem Siliconkautschuk besteht.

Aus der DE 1595554 (US-A 3,445,415) ist ein Verfahren zur Herstellung von wässrigen Pfropfcopolmerlatices bekannt, wobei ungesättigte Monomere auf Organosiloxane der allgemeinen Formel $RSiO3/2$ aufgepfropft werden. Nachteilig bei diesem Verfahren ist, dass sich damit lediglich harte Polymerisate und nicht Pfropfcopolymerisate mit elastomeren Eigenschaften herstellen lassen.

Die DE 2421288 (US-A 3,898,300) beschreibt eine Verfahrensweise zur Herstellung von Pfropfcopolymeren, wobei Styrol und weitere monoethylenisch ungesättigte Verbindungen auf eine Polyorganosiloxan-Pfropfgrundlage aufgepfropft werden. Hierzu werden Gemische von Polyorganosiloxanen oder Gemische von Polyorganosiloxanen und Organosiloxanen in Emulsion vorgelegt, mit einer Homogenisiereinrichtung homogenisiert und anschließend mit den organischen Monomeren gepfropft.

Mit dieser überdies aufwendigen Verfahrensweise sind nur polydisperse Pfropfcopolymerdispersionen mit weiter Teilchengrößenverteilung zugänglich. Die Herstellung von Pfropfcopolymerisaten mit einer monomodalen Teilchengrößenverteilung und mit Teilchengrößen < 0.1 Mikrometer ist mit diesem Verfahren nicht möglich.

Pfropfcopolymerisate aus nicht näher definiertem Organopolysiloxan bzw. Silikonkautschuk und Vinyl- bzw. Acrylmonomeren werden in der DE-A 2539572 beschrieben. Zur Polymerisation wird mit schnelllaufenden Rührwerken gerührt. Man erhält ein polydisperses Produkt mit Teilchengrößen zwischen 1 und 3 mm.

In der DE-A 3629763 werden Silikonkautschuk-Pfropfcopolymerisate mit Vinyl- bzw. Acrylmonomeren beschrieben, wobei die Silikonkautschuk-Phase zumindest teilvernetzt sein soll. Obwohl zur Herstellung der Pfropfgrundlage der Ansatz bereits homogenisiert wird, beträgt die Teilchengröße der Pfropfgrundlage bereits 300 nm. Die Homogenisierung führt zu einer polydispersen Teilchengrößenverteilung.

Die EP-A 231776 beschreibt eine Mischung aus Polyester und Polysiloxanpfropfcopolymer. Die Herstellung des Polysiloxans erfolgt durch Emulsionspolymerisation der monomeren Silane nach vorhergehender Homogenisierung mit Ultraturrax bzw. Homogenisator. Anschließend wird die Polysiloxan-Pfropfgrundlage mit Vinylmonomer gepfropft. Nach der gleichen Methode werden die in der US-A 4,690,986 beschriebenen Polyorganosiloxan-Pfropfcopolymerisate hergestellt. Die Partikelgröße der Pfropfcopolymerisate beträgt in den Beispielen 300 nm; aufgrund der Homogenisierung erhält man eine polydisperse Teilchengrößenverteilung.

Teilchenförmige Pfropfcopolymerisate mit Kern-Schale-Struktur, welche Polysiloxane bzw. Silikone enthalten und mehr als eine Schale aufweisen, werden beispielsweise in der EP-A 246537 beschrieben. Die Herstellung der Siloxan- bzw. Silikonkautschuk-Pfropfgrundlage erfolgt in allen Fällen nach einem Homogenisierungsschritt, was eine polydisperse Teilchengrößenverteilung zur Folge hat.

Die DE-A 3617267 und DE-A 3631539 beschreiben ein Pfropfcopolymerisat mit einem Silikonkautschuk-Kern, einer ersten Hülle aus Acrylatkautschuk und einer aufgepfropften Hülle aus monoethylenisch ungesättigten Monomeren.

Gegenstand der EP-A 296402 sind Silikonkautschuk-Pfropfcopolymerisate bestehend aus einem kautschukartigen Organopolymer-Kern mit einer Hülle aus Organopolysiloxan, worauf ethylenisch ungesättigte Monomere aufgepfropft sind.

Alle diese Produkte führen zu mono-oder polydispersen Siliconcopolymerisaten, die gegebenenfalls noch eine organische Hülle aufweisen und deren Verteilung je nach Herstellungsmethode entweder mono-oder polydispers ist. Nachteilig an diesen Erfindungen ist die Tatsache, dass die Siliconcopolymerisate in wässriger Dispersion vorliegen und erst aus dieser wässrigen Dispersion entweder durch Extraktion oder durch Fällung in einem Nicht-Lösungsmittel gewonnen werden.

Die durch Extraktion gewonnenen Lösungsmittel - Siliconcopolymerisat-Gemische können wie auch wässrige Dispersionen direkt durch Sprühtrocknung behandelt werden, wodurch man feinteilige Silikoncopolymerisat-Pulver erhält. Die in der Literatur beschriebenen Vorgehensweisen zeigen jedoch, dass sowohl Sprühtrocknung als auch Fällung zu Partikel-Agglomeraten führt, welche sich nicht mehr vollständig bei der Einarbeitung in ein organisches Medium wie z.B. ein Lösungsmittel redispergieren lassen. Selbst die Verwendung hoher Scherkräfte zur Zerstörung von Agglomeraten ist hierbei nicht erfolgreich. Diese Agglomerate haben den Nachteil, dass sie zu einer inhomogenen Verteilung der Teilchen in der organischen Matrix führen, was z.B. zur Intransparenz führen kann. Weiterhin bilden diese Agglomeraten bei der Verwendung diese Kern-Schale Materialien als Schlagzäh-Modifier Schwachstellen im Material aus, die zu einer Herabsetzung der Schlagzähigkeit führen können.

In der DE 4040986 A1 sind elastomere Pfropfcopolymerisate beschrieben, die einen Kern aus siliciumorganischem Polymer, eine innere Hülle aus Polydialkylsiloxanen und eine äußere Hülle aus organischem Polymer aufweisen.

Die DE 102004047708 A1 beschreibt Kern-Schale Partikel aus einem Kern-Organopolysiloxanpolymeren und einer Acrylatcopolymerhülle, die reversibel agglomeriert sind und in Epoxidharz dispergiert werden. Die Partikel werden aber nur zum Teil dispergiert und sind zum Teil sehr groß.

Die Dokumente EP 0 492 376 A2, WO 03066695 A2, und WO 2006037559 beschreiben elastomere teilchenförmige Copolymerisate mit Kern-Hülle-Struktur zusammengesetzt aus einem Kern a) bestehend aus einem siliciumorganischen Polymer und einer organopolymeren Hülle c) oder zwei Hüllen b) und c), wobei die innere Hülle b) aus einem siliciumorganischen Polymer besteht.

Vor diesem technologischen Hintergrund bestand die Aufgabe, feinteilige Polymerisate auf der Basis von siliciumorganischen und organischen Polymeren zur Verfügung zu stellen, welche wieder leicht in organischen Medien redispergiert werden können. Diese Polymerisate sollten über ein Verfahren zugänglich sein, welches keine aufwendigen mechanischen Emulgier- und Homogenisierschritte beinhaltet und mittels dessen die Teilchengröße ohne Verwendung von zusätzlichem Emulgator beeinflussbar ist. Bevorzugt sollten die Siliconcopolymerisate klein sein und in einer monomodalen Verteilung anfallen.

Gegenstand der Erfindung sind elastomere teilchenförmige Kern-Hülle Copolymerisate, welche zusammengesetzt sind aus

a) 10 bis 95 Gew%, bezogen auf das Gesamtgewicht des Copolymerisats, eines Kern-Organopolysiloxanpolymeren A der allgemeinen Formel $(R_3SiO_{1/2})_w(R_2SiO_{2/2})_x \cdot (R_1SiO_{3/2})_y \cdot (SiO_{4/2})_z$, in der $w$ = 0 bis 20 Mol %, $x$ = 0 bis 99,5 Mol%, $y$ = 0,5 bis 100 Mol%, $z$ = 0 bis 50 Mol%,

b) 0,02 bis 30 Gew%, bezogen auf das Gesamtgewicht der Copolymerisate, einer Polydialkylsiloxan-Hülle B aus Einheiten der Formel $(R_3SiO_{1/2})_w(R_2SiO_{2/2})_x \cdot (R_{1s}iO_{3/2})_y \cdot (SiO_{4/2})_z$, in der $w$ = 0 bis 20 Mol %, $x$ = 0 bis 99,5 Mol%, $y$ = 0,5 bis 100 Mol%, $z$ = 0 bis 50 Mol%,

c) 0 bis 89,45 Gew%, bezogen auf das Gesamtgewicht der Copolymerisate, einer Hülle C aus Organopolymer monoolefinisch oder polyolefinisch ungesättigter Monomere,
und

d) 0,05 bis 89,5 Gew%, bezogen auf das Gesamtgewicht der Copolymerisate, einer Hülle D aus Organopolymer monoolefinisch ungesättigter Monomere,

wobei **R** gleiche oder verschiedene einwertige Alkyl- oder Alkenyl-Reste mit 1 bis 12 C-Atomen, Aryl-Reste oder substituierte Kohlenwasserstoffreste bedeuten,
und die Teilchen eine durchschnittliche Teilchengröße von 10 bis 300 nm und eine monomodale Teilchengrößenverteilung aufweisen,
mit der Maßgabe, dass in der Polydialkylsiloxan-Hülle B mindestens 5 % der Reste **R** Bedeutungen aufweisen, die ausgewählt werden aus Alkenylresten, Acyloxyalkylresten und Mercaptoalkylresten.

Vorzugsweise sind die Reste **R** Alkylreste, wie der Methyl-, Ethyl-, n-Propyl-, Isopropyl-, n-Butyl-, sec.-Butyl-, Amyl-, Hexylrest; Alkenylreste, wie der Vinyl- und Allylrest und Butenylrest; Arylreste, wie der Phenylrest; oder substituierte Kohlenwasserstoffreste. Beispiele hierfür sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenylrest; Mercaptoalkylreste, wie der 2-Mercaptoethyl- und 3-Mercaptopropylrest; Cyanoalkylreste, wie der 2- Cyanoethyl- und 3-Cyanopropylrest; Aminoalkylreste, wie der 3-Aminopropylrest; Acyloxyalkylreste, wie der 3-Acryloxypropyl- und 3-Methacryloxypropylrest; Hydroxyalkylreste, wie der Hydroxypropylrest. Vorzugsweise weisen die Reste **R** höchstens 15, insbesondere höchstens 10 Kohlenstoffatome auf.

Besonders bevorzugt als Reste **R** sind die Reste Methyl, Ethyl, Propyl, Phenyl, Vinyl, 3-Methacryloxypropyl, 1-Methacryloxymethyl, 1-Acryloxymethyl und 3-Mercaptopropyl, wobei vorzugsweise höchstens 30 Mol% der Reste im Siloxanpolymerisat Vinyl-, 3-Methacryloxypropyl oder 3-Mercaptopropylgruppen sind.

Als Monomere für die Hüllen D und gegebenenfalls C aus Organopolymer werden vorzugsweise Acrylsäureester oder Methacrylsäureester von aliphatischen Alkoholen mit 1 bis 10 C-Atomen, Acrylnitril, Styrol, p-Methylstyrol, alpha -Methylstyrol, Vinylacetat, Vinylpropionat, Maleinimid, Vinylchlorid, Ethylen, Butadien, Isopren und Chloropren oder difunktionelle Reste wie z.B. Allylmethacrylat verwendet. Besonders bevorzugt sind Styrol sowie Acrylsäureester und Methacrylsäureester von aliphatischen Alkoholen mit 1 bis 4 C-Atomen, wie Methanol, Ethanol, Propanol, beispielsweise Methylmethacrylat, Ethylmethacrylat, Methylacrylat, Ethylmethacrylat, Glycidylmethacrylat, Butylacrylat oder Butylmethacrylat. Als organischer Polymeranteil sind sowohl Homopolymerisate als auch Mischpolymerisate der genannten Monomere geeignet.

Die Kern-Hülle Copolymerisate haben vorzugsweise eine mittlere Teilchengröße (Durchmesser) von mindestens 20 nm, insbesondere mindestens 40 nm und von höchstens 250 nm, insbesondere höchstens 200 nm, gemessen mit dem Transmissions-Elektronen-Mikroskop.

Die Teilchengrößenverteilung ist sehr einheitlich, die Kern-Hülle Copolymerisate liegen monomodal vor, das heißt die Teilchen besitzen ein Maximum in der Teilchengrößenverteilung und einen Polydispersitätsfaktor sigma 2 von maximal 0,5, gemessen mit dem Transmissions-Elektronen-Mikroskop.

Die Bestimmung der Teilchengröße und des Polydispersitätsindex sigma 2 erfolgt mit dem Transmissions-Elektronenmikroskop: Mit dem Transmissions-Elektronenmikroskop und der daran angeschlossenen Rechnereinheit werden für die einzelnen Proben die Kurven für die Durchmesserverteilung, die Oberflächenverteilung und die Volumenverteilung ermittelt. Aus der Kurve für die Durchmesserverteilung kann der Mittelwert für die Teilchengröße und dessen Standardabweichung sigma bestimmt werden. Aus der Kurve für die Oberflächenverteilung erhält man den Mittelwert für das mittlere Volumen V. Aus der Kurve für die Oberflächenverteilung erhält man den Mittelwert für die mittlere Oberfläche A der Teilchen. Der Polydispersitätsindex sigma 2 lässt sich mit den folgenden Formeln berechnen:

$$\text{sigma 2 = sigma / x3/2 ,}$$

wobei x3/2=V/A

Nach P. Becher (Encyclopedia of Emulsion Technology Vol. 1, Seite 71, Marcel Dekker New York 1983) liegt dann eine monomodale Teilchengrößenverteilung vor, wenn der nach der obengenannten Formel berechnete Polydispersitätsindex sigma 2 kleiner 0,5 ist. Diese Definition wird hier verwendet.

Der Polydispersitätsindex der Kern-Hülle Copolymerisate hat bevorzugt maximal einen Wert von sigma 2 = 0,3, insbesondere von sigma 2 = 0,2.

Die Glasübergangstemperatur der Hülle D beträgt bevorzugt 60 bis 145 °C, ganz besonders bevorzugt 75 bis 130 °C.

Die Glasübergangstemperatur des Kern-Organopolysiloxanpolymeren A beträgt bevorzugt -60 bis -150 °C, ganz besonders bevorzugt - 75 bis -140 °C.

Die Herstellung des als Pfropfgrundlage dienenden Kerns A mit der Polydialkylsiloxan-Hülle B erfolgt vorzugsweise nach dem bekannten Emulsionspolymerisationsverfahren durch Zudosieren von 0.05 bis 95 Gew%, bezogen auf das Gesamtgewicht des herzustellenden Pfropfcopolymerisats, eines monomeren Silans des Typs $\mathbf{R}Si(O\mathbf{R'})_3$ oder Zudosieren eines Gemisches monomerer Silane vom Typ $[\mathbf{R}_a Si(O\mathbf{R'})4\text{-}a]_\mathbf{n}$, wobei **a** = 0, 1 oder 2 ist und **n** einen Wert von 3-6 haben kann, zu einer bewegten Emulgator/Wasser-Mischung. Der Rest **R** hat die bereits genannten Bedeutungen. **R'** bedeutet Alkylreste mit 1 bis 6 C-Atomen, Arylreste oder substituierte Kohlenwasserstoffreste mit vorzugsweise 2 bis 20 Kohlenstoffatomen, bevorzugt sind Methyl-, Ethyl- und Propylrest. Die Verwendung von hydrophilen Saatlatizes ist möglich.

Bevorzugte geeignete Emulgatoren sind Carbonsäuren mit 9 bis 20 C-Atomen, aliphatisch substituierte Benzolsulfonsäuren mit mindestens 6 C-Atomen in den aliphatischen Substituenten, aliphatisch substituierte Naphthalinsulfonsäuren mit mindestens 4 C-Atomen in den aliphatischen Substituenten, aliphatische Sulfonsäuren mit mindestens 6 C-Atomen in den aliphatischen Resten, Silylalkylsulfonsäuren mit mindestens 6 C-Atomen in den Alkylsubstituenten, aliphatisch substituierte Diphenylethersulfonsäuren mit mindestens 6 C-Atomen in den aliphatischen Resten, Alkylhydrogensulfate mit mindestens 6 C-Atomen in den Alkylresten, quarternäre Ammoniumhalogenide oder -hydroxide. Alle genannten Säuren können als solche oder gegebenenfalls im Gemisch mit ihren Salzen verwendet werden. Wenn anionische Emulgatoren eingesetzt werden, ist es vorteilhaft, solche zu verwenden, deren aliphatische Substituenten mindestens 8 C-Atome enthalten. Als anionische Emulgatoren sind aliphatisch substituierte Benzolsulfonsäuren bevorzugt. Wenn kationische Emulgatoren benutzt werden, ist es vorteilhaft, Halogenide einzusetzen. Die einzusetzende Menge an Emulgator beträgt von 0,1 bis 20,0 Gew%, vorzugsweise 0,2 bis 3,0 Gew%, jeweils bezogen auf die eingesetzte Menge an Organosiliciumverbindungen.

Das Silan oder das Silangemisch wird vorzugsweise dosiert zugegeben. Die Emulsionspolymerisation wird bei einer Temperatur von 30 bis 90 °C, vorzugsweise 60 bis 85 °C, und vorzugsweise bei Normaldruck durchgeführt. Der pH-Wert der Polymerisationsmischung beträgt vorzugsweise 1 bis 4, insbesondere 2 bis 3.

Die Polymerisation zur Herstellung der Pfropfgrundlage kann sowohl in kontinuierlicher Fahrweise als auch diskontinuierlicher Fahrweise durchgeführt werden; vorzugsweise wird sie diskontinuierlich durchgeführt.

Bei kontinuierlicher Fahrweise beträgt die Verweilzeit im Reaktor vorzugsweise 30 bis 60 Minuten. Bei diskontinuierlicher Herstellung der Pfropfgrundlage ist es für die Stabilität der Emulsion vorteilhaft nach Ende der Dosierung noch 0,2 bis 5,0 Stunden nachzurühren. Zur weiteren Verbesserung der Stabilität der Polysiloxan-Emulsion wird der bei der Hydrolyse freigesetzte Alkohol, vor allem bei einem hohen Anteil von Silan der allgemeinen Formel $RSi(OR')_3$, in einer bevorzugten Ausführungsform durch Destillation entfernt.

Im ersten Reaktionsschritt wird eine Zusammensetzung mit einer oder mehreren Komponenten, aus 0 bis 99,5 Mol% eines Silans der allgemeinen Formel $R_2Si(OR')_2$ oder eines Oligomeren der Formel $(R_2SiO)_n$ mit $n$ = 3 bis 8, 0,5 bis 100 Mol% eines Silans der allgemeinen Formel $RSi(OR')_3$ und 0 bis 50 Mol% eines Silans der allgemeinen Formel $Si(OR')_4$ eingesetzt, wobei sich die Angaben in Mol% jeweils auf die Bruttozusammensetzung der Pfropfgrundlage beziehen.

Im ersten Reaktionsschritt werden vorzugsweise 0,5 bis 10 Mol% Silane der allgemeinen Formel $RSi(OR')_3$ und vorzugsweise 0 bis 50 Mol%, insbesondere 0 bis 10 Mol% Silane der allgemeinen Formel $Si(OR')_4$ zudosiert, wobei sich die Angaben in Mol% jeweils auf die Bruttozusammensetzung der Pfropfgrundlage beziehen.

Beispiele für Silane der allgemeinen Formel $R_2Si(OR')_2$ sind Dimethyldiethoxysilan oder Dimethyldimethoxysilan. Beispiele für Oligomere der Formel $(R_2SiO)_n$ mit $n$ = 3 bis 8 sind Decamethylcyclopentasiloxan, Octamethylcyclotetrasiloxan oder Hexamethylcyclotrisiloxan.

Beispiele für Silane der allgemeinen Formel $RSi(OR')_3$ sind Methyltrimethoxysilan, Phenyltriethoxysilan, Vinyltrimethoxysilan, 3-Chlorpropyltrimethoxysilan, 3-Mercaptopropyltrimethoxysilan, oder 3-Methacryloxypropyltrimethoxysilan.

Beispiele für Silane der allgemeinen Formel $Si(OR')_4$ sind Tetramethoxysilan oder Tetraethoxysilan.

Vor dem Aufpfropfen der monoethylenisch ungesättigten Monomeren wird die Pfropfgrundlage noch mit dem siliciumorganischen Hüllpolymerisat B gepfropft. Die Herstellung dieser Hülle B erfolgt ebenfalls bevorzugt nach dem Emulsionspolymerisationsverfahren. Hierzu werden funktionelle Silane der allgemeinen Formel $RSi(OR')_3$ oder funktionelle Silane der allgemeinen Formel $R_2Si(OR')_2$ oder niedermolekulare Siloxane der allgemeinen Formel $(R_2SiO)_n$ mit $n$ = 3 bis 8 zu der bewegten Emulsion der Pfropfgrundlage zudosiert. Die Reste $R$ und $R'$ haben dabei die bereits genannten Bedeutungen. Vorzugsweise wird kein weiterer Emulgator zugegeben, da die in der Emulsion der Pfropfgrundlage vorhandene Emulgatormenge zur Stabilisierung ausreicht.

Die Polymerisation zur Aufpfropfung der Hülle B wird bevorzugt bei einer Temperatur von 15 bis 90 °C, insbesondere 60 bis 85 °C und vorzugsweise bei Normaldruck durchgeführt. Der pH-Wert der Polymerisationsmischung beträgt bevorzugt 1 bis 4, insbesondere 2 bis 3. Auch dieser Reaktionsschritt kann sowohl kontinuierlich als auch diskontinuierlich erfolgen. Die Verweilzeiten im Reaktor bei kontinuierlicher Darstellung, beziehungsweise die Nachrührzeiten im Reaktor bei diskontinuierlicher Darstellung sind abhängig von der Menge zudosierter Silane oder Siloxane und betragen vorzugsweise von 2 bis 6 Stunden. Am zweckmäßigsten ist es, die Reaktionsschritte zur Herstellung der Pfropfgrundlage A und des Hüllpolymerisats B in einem geeigneten Reaktor zu kombinieren und gegebenenfalls zum Schluss den gebildeten Alkohol destillativ zu entfernen.

Die funktionelle Silane der allgemeinen Formel $RSi(OR')_3$, $R_2Si(OR')_2$ oder niedermolekulare Siloxane der allgemeinen Formel $(R_2^1SiO_{2/2})_n$ mit $n$ = 3 bis 8 werden in einer solchen Menge zudosiert, dass der Anteil an siliciumorganischem Hüllpolymerisat B 0,2 bis 30 Gew%, vorzugsweise 1 bis 15 Gew%, bezogen auf das Gesamtgewicht des teilchenförmigen Pfropfcopolymerisats, beträgt.

Der Festgehalt der so hergestellten Siloxanelastomersole sollte bevorzugt, sowohl ohne als auch mit siliciumorganischem Hüllpolymerisat B, maximal 35 Gew% betragen, da sonst ein hoher Anstieg der Viskosität die Weiterverarbeitung der Sole als Pfropfgrundlage erschwert.

Danach werden gegebenenfalls zur Aufbringung der inneren Hülle C die bereits genannten Monomere, die ausgewählt werden aus mono- und polyethylenisch ungesättigten Monomeren, auf die mit dem siliciumorganischen Hüllpolymerisat B gepfropfte Polysiloxanpfropfgrundlage aufgepfropft. Die organischen Monomere werden dazu bevorzugt in einer Menge zudosiert, die 0,5 bis 40 Gew%, vorzugsweise 1 bis 15 Gew%, jeweils bezogen auf das Gesamtgewicht des Pfropfcopolymerisats, beträgt. Die Pfropfung erfolgt vorzugsweise nach dem Emulsionspolymerisationsverfahren in Gegenwart von wasserlöslichen oder monomerlöslichen Radikalinitiatoren. Geeignete Radikalinitiatoren sind wasserlösliche Peroxoverbindungen, organische Peroxide, Hydroperoxide oder Azoverbindungen. Besonders bevorzugt wird die Redoxkatalyse beispielsweise mit $K_2S_2O_8$ und $KHSO_3$ gestartet. Oxidations- und Reduktionskomponente werden dabei vorzugsweise in einer Menge von 0,01 bis 2 Gew%, bezogen auf die Monomermenge, eingesetzt.

Geeignete Monomere sind beispielsweise Allylmethacrylat, Triallylcyanurat, Triallylisocyanurat, Diallylphthalat, Ethylenglykoldimethacrylat, 1,3-Butylenglykoldimethacrylat und Divinylbenzol.

Die Reaktionstemperaturen sind abhängig von der Art des verwendeten Initiators und betragen vorzugsweise 15 bis 90 °C, insbesondere 30 bis 85 °C. Um besonders bei esterfunktionellen Monomeren die Hydrolyse zu vermeiden, sollte der pH-Wert vorzugsweise auf 4 bis 6 eingestellt werden. Vorzugsweise wird auch bei diesem Reaktionsschritt, zusätzlich zu dem in der ersten Stufe zugegebenen Emulgator kein weiterer Emulgator zudosiert. Eine zu hohe Emulgatorkonzentration kann zu solubilisatfreien Micellen führen, die als Keime für rein organische Latexpartikel fungieren können. Auch dieser Reaktionsschritt kann sowohl kontinuierlich als auch diskontinuierlich durchgeführt werden.

Im letzten Schritt des Herstellungsverfahrens werden die bereits genannten monoethylenisch ungesättigten Monomere auf die vorzugsweise mit der inneren Hülle C gepfropften Polysiloxanpfropfgrundlage aufgepfropft. Die organischen Monomere werden dazu vorzugsweise in einer Menge zudosiert, die 5 bis 85 Gew%, vorzugsweise 10 bis 50 Gew%, jeweils bezogen auf das Gesamtgewicht des Pfropfcopolymerisats, beträgt. Die Pfropfung erfolgt bevorzugt nach dem Emulsionspolymerisationsverfahren in Gegenwart von wasserlöslichen oder monomerlöslichen Radikalinitiatoren. Geeignete Radikalinitiatoren sind wasserlösliche Peroxoverbindungen, organische Peroxide, Hydroperoxide oder Azoverbindungen. Besonders bevorzugt wird die Redoxkatalyse beispielsweise mit $K_2S_2O_8$ und $KHSO_3$ gestartet. Oxidations- und Reduktionskomponente werden dabei vorzugsweise in einer Menge von 0,01 bis 2 Gew%, bezogen auf die Monomermenge, eingesetzt.

Die Reaktionstemperaturen sind abhängig von der Art des verwendeten Initiators und betragen vorzugsweise 15 bis 90 °C, insbesondere 30 bis 85 °C. Um besonders bei esterfunktionellen Monomeren die Hydrolyse zu vermeiden, sollte der pH-Wert vorzugsweise auf 4 bis 6 eingestellt werden. Vorzugsweise wird auch bei diesem Reaktionsschritt, zusätzlich zu dem in der ersten Stufe zugegebenen Emulgator, kein weiterer Emulgator zudosiert. Eine zu hohe Emulgatorkonzentration kann zu solubilisatfreien Micellen führen, die als Keime für rein organische Latexpartikel fungieren können. Auch dieser Reaktionsschritt kann sowohl kontinuierlich als auch diskontinuierlich durchgeführt werden.

Die Isolierung der teilchenförmigen Pfropfcopolymerisate aus der Emulsion kann nach bekannten Verfahren erfolgen. Besonders bevorzugt ist die Isolierung aus wäßriger Dispersion durch Sprühtrocknung.

Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 150°C, bevorzugt 70°C bis 90°C, je nach Anlage, T(g) des Copolymeren und gewünschtem Trocknungsgrad, gewählt.

Die mittlere Partikelgröße der erhaltenen Pulver beträgt bevorzugt 10 bis 200 μm, ganz besonders bevorzugt 25 μm bis 170 μm. Dabei sind diese Pulver lediglich Agglomerate aus kleinen Primärpartikeln, die jeweils eine mittlere Teilchengröße im Bereich von bevorzugt 10 bis 300 nm haben.

Mit der erfindungsgemäßen Verfahrensweise kann die Partikelgröße nicht nur über den Emulgatorgehalt, sondern auch über die Reaktionstemperatur, den pH-Wert und vor allem über die Zusammensetzung der teilchenförmigen Pfropfcopolymerisate beeinflusst werden. Die Einführung einer siliciumorganischen Hülle b) vermittelt eine verbesserte Phasenanbindung der Organopolymerhülle c) oder d) an die siliciumorganische Pfropfgrundlage. Dadurch werden die teilchenförmigen Pfropfcopolymerisate leicht in organischen Medien bei niedrigen Temperaturen von beispielsweise 20 bis 60 °C redispergierbar.

Die teilchenförmigen Pfropfcopolymerisate eignen sich vor allem zur Anwendung als modifizierte Thermoplasten oder zur Verwendung als Additive zur Polymermodifizierung. Hier verbessern sie vor allen Dingen die Schlagzähigkeit, das Verarbeitungsverhalten, aber auch die Nichtentflammbarkeit. Werden die teilchenförmigen Pfropfcopolymerisate per se als elastomere Thermoplasten eingesetzt sollte der Gehalt an elastomerem Polysiloxan nicht mehr als 40 Gew.% betragen. Weiter zeigen oder bewirken die teilchenförmigen Pfropfcopolymerisate verbesserte mechanische Eigenschaften wie Witterungs- und Alterungsstabilität, Temperaturstabilität, Kerbschlagzähigkeit und Tieftemperaturzähigkeit.

Alle vorstehenden Symbole der vorstehenden Formeln weisen ihre Bedeutungen jeweils unabhängig voneinander auf.

In allen Formeln ist das Siliciumatom vierwertig.

Soweit nicht anders angegeben sind alle Mengen- und Prozentangaben auf das Gewicht bezogen, alle Drücke 0,10 MPa (abs.) und alle Temperaturen 20°C.

**Beispiel 1 (nicht erfindungsgemäß):**

Herstellung der Pfropfgrundlage:

3800 g Wasser und 19 g (1,9 Gew% bezogen auf Si-Verbindungen) Dodecylbenzolsulfonsäure wurden auf 85 °C erwärmt. Es wurde eine Mischung aus 855 g (2,9 Mol, 74 Mol%) Octamethylcyclotetrasiloxan, 97 g (0,7 Mol, 18 Mol%) Methyltrimethoxysilan und 66 g (0,3 Mol, 8 Mol%) Methacryloxypropyltrimethoxysilan zudosiert und 4 Stunden bei 85 °C nachgerührt. Nach Abnahme von circa 400 g Destillat erhielt man eine Dispersion mit 21 Gew% Festgehalt und einer Teilchengröße von 111 nm.

Pfropfung:

1350 g der Dispersion wurden in einem 15 1-Reaktor mit Stickstoff inertisiert und auf pH 4 eingestellt. Es wurden 90 g Methylmethacrylat zudosiert und die Polymerisation durch Zugabe von 5,2 g (0,6 Gew% bezogen auf Monomer) $K_2S_2O_8$ und 18 g (2,1 Gew% bezogen auf Monomer) $NaHSO_3$ (37 Gew% in Wasser) gestartet. Innerhalb einer Stunde wurden weitere 780 g Methylmethacrylat zudosiert, anschließend auf 65 °C aufgeheizt und innerhalb 3 Stunden auspolymerisiert. Es resultierte ein Latex mit 24 Gew% Polymethylmethacrylat im Pfropfcopolymeren und mit 26,7 Gew% Festgehalt, einer mittleren Teilchengröße von 127 nm und einem Polydispersitätsindex von sigma 2 = 0,02.

**Beispiel 2 (nicht erfindungsgemäß):**

Herstellung der Pfropfgrundlage:

Zu 950 g Wasser und 1,0 g (0,9 Gew% bezogen auf Si-Verbindung) Dodecylbenzolsulfonsäure wurden bei 80 °C und innerhalb 2 Stunden 91,8 g (0,7 Mol, 88 Mol%) Methyltrimethoxysilan und 17,2 g (0,1 Mol, 12 Mol%) Tetraethoxysilan zugetropft und 30 Minuten nachgerührt.

Pfropfung der Hülle B:

Anschließend wurde die Temperatur auf 90 ° C erhöht und innerhalb 1,5 Stunden 80 g Octamethylcyclotetrasiloxan sowie 18 g 10 %ige Dodecylbenzolsulfonsäure in Wasser zudosiert, 3,5 Stunden nachgerührt und auf Ursprungsvolumen ausdestilliert. Man erhielt ein Hydrosol mit 12,7 % Festgehalt und einer mittleren Teilchengröße von 36 nm.

Pfropfung der Hülle D:

800 g des Hydrosols wurden mit Natriumcarbonatlösung auf pH 5 eingestellt und mit Stickstoff gesättigt. Nach der Zugabe von 3 g frisch gewaschenem Methylmethacrylat wurde durch Zugabe von 0,04 g (0,13 Gew% bezogen auf Monomer) $K_2S_2O_8$ und 0,05 g (0,16 Gew% bezogen auf Monomer) $NaHSO_3$ (37 Gew% in Wasser) gestartet und dann innerhalb 30 Minuten weitere 27,5 g Methylmethacrylat zudosiert, anschließend auf 65 °C aufgeheizt und innerhalb 3 Stunden auspolymerisiert. Es resultierte ein Latex mit 23 Gew% Polymethylmethacrylat im Pfropfcopolymeren und mit 17 Gew% Festgehalt, einer mittleren Teilchengröße von 50 nm und einem Polydispersitätsindex von sigma 2 = 0,02.

**Beispiel 3 (erfindungsgemäß):**

Herstellung der Pfropfgrundlage:

3000 g Wasser, 5 g (0,5 Gew% bezogen auf Si-Verbindungen) Dodecylbenzolsulfonsäure und 8 g Essigsäure wurden auf 90 °C erwärmt. Es wurde eine Mischung aus 855 g (92 Mol%) Octamethylcyclotetrasiloxan und 95 g (5 Mol%) Vinyltrimethoxysiloxan innerhalb von 2 Std. zudosiert und 3 Std nachgerührt.

Pfropfung der Hülle B

Anschließend wurden 63 g (2 Mol%) Methacryloxypropyltrimethoxysilan zudosiert und 1 Stunde bei 90 °C nachgerührt. Man erhielt eine Dispersion mit 23 Gew% Festgehalt und einer mittleren Teilchengröße von 132 nm.

Pfropfung der Hülle D:

13050 g der Dispersion wurden in einem 15 1-Reaktor mit Stickstoff inertisiert und auf pH 4 eingestellt. Es wurden 90 g Methylmethacrylat zudosiert und die Polymerisation durch Zugabe von 5,2 g (0,6 Gew% bezogen auf Monomer) $K_2S_2O_8$ und 18 g (2,1 Gew bezogen auf Monomer) $NaHSO_3$ (37 Gew% in Wasser) gestartet. Innerhalb einer Stunde wurden weitere 780 g Methylmethacrylat zudosiert, anschließend auf 65 °C aufgeheizt und innerhalb 3 Stunden auspolymerisiert. Es resultierte ein Latex mit 24 Gew% Polymethylmethacrylat im Pfropfcopolymeren und mit 26,7 Gew% Festgehalt, einer mittleren Teilchengröße von 127 nm und einem Polydispersitätsindex von sigma 2 = 0,02.

**Beispiel 4 (erfindungsgemäß):**

Herstellung der Pfropfgrundlage:

3000 g Wasser, 5 g (0,5 Gew% bezogen auf Si-Verbindungen) Dodecylbenzolsulfonsäure und 8 g Essigsäure wurden auf 90 °C erwärmt. Es wurde eine Mischung aus 855 g (92 Mol%) Octamethylcyclotetrasiloxan und 95 g (5 Mol%) Vinyltrimethoxysiloxan innerhalb von 2 Std. zudosiert und 3 Std nachgerührt.

Pfropfung der Hülle B

Anschließend wurden 63 g (2 Mol%) Methacryloxypropyltrimethoxysilan zudosiert und 1 Stunde bei 90 °C nachgerührt. Man erhielt eine Dispersion mit 23 Gew% Festgehalt und einer mittleren Teilchengröße von 132 nm.

Pfropfung der Hülle D:

13050 g der Dispersion wurden in einem 15 1-Reaktor mit Stickstoff inertisiert und auf pH 4 eingestellt. Es wurden 90 g Methylmethacrylat zudosiert und die Polymerisation durch Zugabe von 5.2 g (0.6 Gew% bezogen auf Monomer) $K_2S_2O_8$ und 18 g (2.1 Gew% bezogen auf Monomer) $NaHSO_3$ (37 Gew% in Wasser) gestartet. Innerhalb einer Stunde wurden ein Gemisch aus weitere 700 g Methylmethacrylat und 90 g Glycidylmethacrylat zudosiert, anschließend auf 65 °C aufgeheizt und innerhalb 3 Stunden auspolymerisiert. Es resultierte ein Latex mit 24 Gew% Polymethylmethacrylat im Pfropfcopolymeren und mit 26.4 Gew% Festgehalt, einer mittleren Teilchengröße von 121 nm und einem Polydispersitätsindex von sigma 2 = 0,03.

**Beispiele 5-8**

Isolierung der Kern-Schale Materialien durch Sprühtrocknung:

Die in den Beispielen 1-4 hergestellten Dispersionen wurden aus wässriger Dispersion versprüht. Dabei wurde in einem Sprühtrocknungsturm der Fa. Nubilosa (Höhe 12 m, Durchmesser 2,2 m) mit einem Druck von 33 bar die Dispersion durch eine Einstoffdüse versprüht. Die Eintrittstemperatur betrug 145 °C, die Austrittstemperatur betrug 75 °C, wobei die Dispersionen auf 55 °C vorgewärmt waren. Der Durchsatz betrug 65 1 Dispersion pro Stunde und die Trocknungsluftmenge 2000 $m^3$/h.
Man erhielt von allen 3 Dispersionen pulverförmige Produkte.

|  | Beispiel 5* | Beispiel 6* | Beispiel 7 | Beispiel 8 |
|---|---|---|---|---|
| eingesetzte Dispersion | Beispiel 1 2 | Beispiel | Beispiel 3 | Beispiel 4 |
| Menge Dispersion | 300 kg | 300 kg | 300 kg | 300 kg |
| Menge Pulver | 72 kg | 48 kg | 74 kg | 3 kg |
| Glasübergangstemperatur Kern | - 115 °C | nicht bestimmt | - 115 °C | - 115 °C |
| Glasübergangstemperatur Hülle | 96 °C | nicht bestimmt | 94 °C | 91 °C |
| mittlere Teilchengröße | 67 $\mu$m | 58 $\mu$m | 43 $\mu$m | 35 $\mu$m |
| *nicht erfindungsgemäß | | | | |

Anwendungstechnische Prüfung:

**Beispiele 9-20**

Die in den Beispielen 5-8 gewonnenen Pulver wurden in verschiedene Lösungsmittel eingemischt und über Nacht gerührt. Anschließend wurde nach 16 Stunden Rührzeit mit einem Papierfilter abfiltriert und getrocknet. Abschließend wurde der Festgehalt des Filtrates bestimmt.

|  | **Beispiel 9*** | **Beispiel 10*** | **Beispiel 11** | **Beispiel 12** |
|---|---|---|---|---|
| verwendetes Pulver | Beispiel 5 | Beispiel 6 | Beispiel 7 | Beispiel 8 |

(fortgesetzt)

| | Beispiel 9* | Beispiel 10* | Beispiel 11 | Beispiel 12 |
|---|---|---|---|---|
| Menge THF | 90 g | 90 g | 90 g | 90 g |
| Menge Pulver | 10 g | 10 g | 10 g | 10 g |
| theoretischer Festgehalt (100% Redispergierung) | 10 % | 10 % | 10 % | 10 % |
| Aussehen Mischung | weiß, Sediment | weiß, Sediment | transluzent, kein Sediment | transluzent, kein Sediment |
| Festgehalt Filtrat | 0,5 % | 0,6 % | 9,9 % | 9,5 % |
| Redispergierung | 5 % | 6 % | 99 % | 95 % |
| *nicht erfindungsgemäß | | | | |

| | Beispiel 13* | Beispiel 14* | Beispiel 15 | Beispiel 16 |
|---|---|---|---|---|
| verwendetes Pulver | Beispiel | Beispiel 5 6 7 8 | Beispiel | Beispiel |
| Menge Toluol | 90 g | 90 g | 90 g | 90 g |
| Menge Pulver | 10 g | 10 g | 10 g | 10 g |
| theoretischer Festgehalt (100% Redispergierung) | 10 % | 10 % | 10 % | 10 % |
| Aussehen Mischung | weiß, Sediment | weiß, Sediment | transluzent, kein Sediment | transluzent, kein Sediment |
| Festgehalt Filtrat | 0,7 % | 0,6 % | 9,8 % | 9.6 % |
| Redispergierung | 7 % | 6 % | 98 % | 96 % |
| *nicht erfindungsgemäß | | | | |

| | Beispiel 17* | Beispiel 18* | Beispiel 19 | Beispiel 20 |
|---|---|---|---|---|
| verwendetes Pulver | Beispiel | Beispiel 5 6 7 | Beispiel | Beispiel 8 |
| Menge MIBK | 90 g | 90 g | 90 g | 90 g |
| Menge Pulver | 10 g | 10 g | 10 g | 10 g |
| theoretischer Festgehalt (100% Redispergierung) | 10 % | 10 % | 10 % | 10 % |
| Aussehen Mischung | weiß, Sediment | weiß, Sediment | transluzent, kein Sediment | transluzent, kein Sediment |
| Festgehalt Filtrat | 0,6 | 0,5 | 9.9 % | 9.4 % |
| Redispergierung | 6 % | 5 % | 99 % | 94 % |
| *nicht erfindungsgemäß | | | | |

Die erfindungsgemäßen Pulver haben eine Redispergierbarkeit von über 80 %.
Die vollkommene Redispergierung ist auch an der Transluzenz der erhaltenen Lösungen optisch klar nachweisbar. Dies zeigt ganz klar, dass die Pulveragglomerate durch die Redispergierung in ihre Primärteilchen zerfallen.
Die nicht-erfindungsgemäßen Pulver zeigen generell eine weitaus schlechtere Redispergierbarkeit.

Die Teilchengröße und der Polydispersitätsindex wurden mit einem Transmissions-Elektronenmikroskop der Fa. Phillips (Phillips CM 12) und einer Auswerteeinheit der Fa. Zeiss (Zeiss TGA 10) bestimmt. Der zu vermessende Latex wurde mit Wasser verdünnt und mit einer 1 µl Impfschlinge auf ein Standard-Kupfernetz aufgetragen.

**Patentansprüche**

**1.**  Elastomere teilchenförmige Kern-Hülle Copolymerisate, welche zusammengesetzt sind aus

a) 10 bis 95 Gew%, bezogen auf das Gesamtgewicht des Copolymerisats, eines Kern-Organopolysiloxanpolymeren A der allgemeinen Formel

$$(\mathbf{R}_3SiO_{1/2})_{\mathbf{w}}(\mathbf{R}_2SiO_{2/2})_{\mathbf{x}}\cdot(\mathbf{R}_1SiO_{3/2})_{\mathbf{y}}\cdot(SiO_{4/2})_{\mathbf{z}},$$

in der $\mathbf{w}$ = 0 bis 20 Mol %, $\mathbf{x}$ = 0 bis 99,5 Mol%, $\mathbf{y}$ = 0,5 bis 100 Mol%,
$\mathbf{z}$ = 0 bis 50 Mol%,
b) 0,02 bis 30 Gew%, bezogen auf das Gesamtgewicht der Copolymerisate, einer Polydialkylsiloxan-Hülle B aus Einheiten der Formel

$$(\mathbf{R}_3SiO_{1/2})_{\mathbf{w}}(\mathbf{R}_2SiO_{2/2})_{\mathbf{x}}\cdot(\mathbf{R}_1SiO_{3/2})_{\mathbf{y}}\cdot(SiO_{4/2})_{\mathbf{z}},$$

in der $\mathbf{w}$ = 0 bis 20 Mol %, $\mathbf{x}$ = 0 bis 99,5 Mol%, $\mathbf{y}$ = 0,5 bis 100 Mol%,
$\mathbf{z}$ = 0 bis 50 Mol%,
c) 0 bis 89,45 Gew%, bezogen auf das Gesamtgewicht der Copolymerisate, einer Hülle C aus Organopolymer monoolefinisch oder polyolefinisch ungesättigter Monomere,
und
d) 0,05 bis 89,5 Gew%, bezogen auf das Gesamtgewicht der Copolymerisate, einer Hülle D aus Organopolymer monoolefinisch ungesättigter Monomere,

wobei $\mathbf{R}$ gleiche oder verschiedene einwertige Alkyl- oder Alkenyl-Reste mit 1 bis 12 C-Atomen, Aryl-Reste oder substituierte Kohlenwasserstoffreste bedeuten,
und die Teilchen eine durchschnittliche Teilchengröße von 10 bis 300 nm und eine monomodale Teilchengrößenverteilung aufweisen,
mit der Maßgabe, dass in der Polydialkylsiloxan-Hülle B mindestens 5 % der Reste $\mathbf{R}$ Bedeutungen aufweisen, die ausgewählt werden aus Alkenylresten, Acyloxyalkylresten und Mercaptoralkylresten.

**2.**  Elastomere Copolymerisate nach Anspruch 1, bei denen die mittlere Teilchengröße höchstens 200 nm beträgt.

**3.**  Elastomere Copolymerisate nach Anspruch 1 oder 2, bei denen die Glasübergangstemperatur des Kern-Organopolysiloxanpolymeren A -60 bis -140 °C beträgt.

**4.**  Elastomere Copolymerisate nach Anspruch 1 bis 3, bei denen die Glasübergangstemperatur der Hülle D 60 bis 140 °C beträgt.

**5.**  Verfahren zur Herstellung von elastomeren Copolymerisaten gemäß Anspruch 1 bis 4, bei dem in einem ersten Reaktionsschritt in einem Emulsionspolymerisationsverfahren 0 bis 99,5 Mol% eines Silans der allgemeinen Formel $\mathbf{R}_2Si(O\mathbf{R}')_2$ oder eines Oligomeren der Formel $(\mathbf{R}_2SiO)_{\mathbf{n}}$ mit $\mathbf{n}$ = 3 bis 8, 0,5 bis 100 Mol% eines Silans der allgemeinen Formel $\mathbf{R}Si(O\mathbf{R}')_3$ und 0 bis 50 Mol% eines Silans der allgemeinen Formel $Si(O\mathbf{R}')_4$ umgesetzt werden und dabei das Kern-Organopolysiloxanpolymere A gebildet wird,
in einem zweiten Reaktionsschritt in einem Emulsionspolymerisationsverfahren funktionelle Silane, die ausgewählt werden aus Silanen der allgemeinen Formel $\mathbf{R}Si(O\mathbf{R}')_3$, funktionellen Silanen der allgemeinen Formel $\mathbf{R}_2Si(O\mathbf{R}')_2$ und niedermolekularen Siloxanen der allgemeinen Formel $(\mathbf{R}_2SiO)_{\mathbf{n}}$ mit $\mathbf{n}$ = 3 bis 8, zu der bewegten Emulsion des Kern-Organopolysiloxanpolymeren A in einer solchen Menge zudosiert werden, dass der Anteil an Polydialkylsiloxan-Hüllpolymerisat B 0,02 bis 30 Gew%, bezogen auf das Gesamtgewicht des Polymerisats beträgt,
und in einem dritten Reaktionsschritt in einem Emulsionspolymerisationsverfahren ethylenisch ungesättigte Monomere zu dem Kern-Organopolysiloxanpolymeren A mit einer Hülle aus Polydialkylsiloxan-Polymerisat B in einer solchen Menge zudosiert werden, dass der Anteil der Hülle D aus Organopolymer monoolefinisch ungesättigter Polymere D 0,05 bis 89,5 Gew%, bezogen auf das Gesamtgewicht des Polymerisats beträgt,

wobei **R** gleiche oder verschiedene einwertige Alkyl- oder Alkenyl-Reste mit 1 bis 12 C-Atomen, Aryl-Reste oder substituierte Kohlenwasserstoffreste und **R**' Alkylreste mit 1 bis 6 C-Atomen, Arylreste oder substituierte Kohlenwasserstoffreste bedeuten,

mit der Maßgabe, dass bei den im zweiten Reaktionsschritt eingesetzten funktionellen Silanen mindestens 5 % der Reste **R** Bedeutungen aufweisen, die ausgewählt werden aus Alkenylresten, Acyloxyalkylresten und Mercaptoalkylresten.

6. Verfahren nach Anspruch 5, bei dem der 2. Schritt bei einer Temperatur von 15 bis 90 °C durchgeführt wird.

7. Verfahren nach Anspruch 5 oder 6, bei dem der 2. Schritt bei einem pH-Wert von 1 bis 4 durchgeführt wird.

8. Verfahren nach Anspruch 5 bis 7, bei dem nach dem 2.
Schritt zur Aufbringung einer inneren Hülle C Monomere, die ausgewählt werden aus mono- und polyethylenisch ungesättigten Monomeren zu dem Kern-Organopolysiloxanpolymeren A mit einer Hülle aus Polydialkylsiloxan-Polymerisat B in einer solchen Menge zudosiert werden, dass der Anteil der Hülle C aus Organopolymer mono- oder polyethylenisch ungesättigter Monomere höchstens 89,45 Gew%, bezogen auf das Gesamtgewicht des Polymerisats beträgt.

9. Verfahren nach Anspruch 5 bis 8, bei dem die elastomeren Copolymerisate nach dem 3. Schritt aus der Emulsion durch Sprühtrocknung isoliert werden.

## Claims

1. Elastomeric particulate core-shell copolymers, composed of

   a) from 10 to 95% by weight, based on the total weight of the copolymer, of an organopolysiloxane core polymer A of the general formula

   $$(R_3SiO_{1/2})_w(R_2SiO_{2/2})_x \cdot (R_1SiO_{3/2})_y \cdot (SiO_{4/2})_z,$$

   where **w** = from 0 to 20 mol%, **x** = from 0 to 99.5 mol%, **y** = from 0.5 to 100 mol%, **z** = from 0 to 50 mol%,
   b) from 0.02 to 30% by weight, based on the total weight of the copolymers, of a polydialkylsiloxane shell B composed of units of the formula

   $$(R_3SiO_{1/2})_w(R_2SiO_{2/2})_x \cdot (R_1SiO_{3/2})_y \cdot (SiO_{4/2})_z,$$

   where **w** = from 0 to 20 mol%, **x** = from 0 to 99.5 mol%, **y** = from 0.5 to 100 mol%, **z** = from 0 to 50 mol%,
   c) from 0 to 89.45% by weight, based on the total weight of the copolymers, of a shell C composed of organopolymer of monoolefinically or polyolefinically unsaturated monomers,
   and
   d) from 0.05 to 89.5% by weight, based on the total weight of the copolymers, of a shell D composed of organopolymer of monoolefinically unsaturated monomers, where **R** are identical or different monovalent alkyl or alkenyl moieties having from 1 to 12 carbon atoms, aryl moieties, or substituted hydrocarbon moieties,

   and the average size of the particles is from 10 to 300 nm, and they have monomodal particle-size distribution, with the proviso that, in the polydialkylsiloxane shell B, at least 5% of the moieties **R** have definitions which are selected from alkenyl moieties, acyloxyalkyl moieties, and mercaptoalkyl moieties.

2. Elastomeric copolymers according to Claim 1, in which the average particle size is at most 200 nm.

3. Elastomeric copolymers according to Claim 1 or 2, in which the glass transition temperature of the organopolysiloxane core polymer A is from -60 to -140°C.

4. Elastomeric copolymers according to any of Claims 1 to 3, in which the glass transition temperature of the shell D is from 60 to 140°C.

5. Process for the production of elastomeric copolymers according to any of Claims 1 to 4, in which, in a first reaction step, in an emulsion polymerization process, from 0 to 99.5 mol% of a silane of the general formula $\mathbf{R}_2\text{Si}(\text{O}\mathbf{R}')_2$ or of an oligomer of the formula $(\mathbf{R}_2\text{SiO})_n$, where n = from 3 to 8, from 0.5 to 100 mol% of a silane of the general formula $\mathbf{R}\text{Si}(\text{O}\mathbf{R}')_3$, and from 0 to 50 mol% of a silane of the general formula $\text{Si}(\text{O}\mathbf{R}')_4$ are reacted to form the organopolysiloxane core polymer A,

in a second reaction step, in an emulsion polymerization process, functional silanes which are selected from silanes of the general formula $\mathbf{R}\text{Si}(\text{O}\mathbf{R}')_3$, functional silanes of the general formula $\mathbf{R}_2\text{Si}(\text{O}\mathbf{R}')_2$, and low-molecular-weight siloxanes of the general formula $(\mathbf{R}_2\text{SiO})_n$, where $\mathbf{n}$ = from 3 to 8 are fed into the moving emulsion of the organopolysiloxane core polymer A in an amount such that the proportion of polydialkylsiloxane shell polymer B is from 0.02 to 30% by weight, based on the total weight of the polymer, and, in a third reaction step, in an emulsion polymerization process, ethylenically unsaturated monomers are fed into the organopolysiloxane core polymer A with a shell composed of polydialkylsiloxane polymer B in an amount such that the proportion of the shell D composed of organopolymer of monoolefinically unsaturated polymers D is from 0.05 to 89.5% by weight, based on the total weight of the polymer,

where $\mathbf{R}$ are identical or different monovalent alkyl or alkenyl moieties having from 1 to 12 carbon atoms, aryl moieties, or substituted hydrocarbon moieties, and $\mathbf{R}'$ are alkyl moieties having from 1 to 6 carbon atoms, aryl moieties, or substituted hydrocarbon moieties, with the proviso that in the case of the functional silanes used in the second reaction step, at least 5% of the moieties $\mathbf{R}$ have definitions which are selected from alkenyl moieties, acyloxyalkyl moieties, and mercaptoalkyl moieties.

6. Process according to Claim 5, in which the 2nd step is carried out at a temperature of from 15 to 90°C.

7. Process according to Claim 5 or 6, in which the 2nd step is carried out at a pH of from 1 to 4.

8. Process according to any of Claims 5 to 7, in which, after the 2nd step, for application of an inner shell C, monomers which are selected from mono- and polyethylenically unsaturated monomers are fed into the organopolysiloxane core polymer A with a shell composed of polydialkylsiloxane polymer B in an amount such that the proportion of the shell C composed of organopolymer of mono- or polyethylenically unsaturated monomers is at most 89.45% by weight, based on the total weight of the polymer.

9. Process according to any of Claims 5 to 8, in which, after the 3rd step, the elastomeric copolymers are isolated from the emulsion by spray drying.

**Revendications**

1. Copolymérisats de type noyau-enveloppe particulaires élastomères, qui sont composés

   a) de 10 à 95 % en poids, par rapport au poids total du copolymérisat, d'un polymère organopolysiloxane A constituant le noyau, de formule générale

   $$(\mathbf{R}_3\text{SiO}_{1/2})_{\mathbf{w}}(\mathbf{R}_2\text{SiO}_{2/2})_{\mathbf{x}} \cdot (\mathbf{R}_1\text{SiO}_{3/2})_{\mathbf{y}} \cdot (\text{SiO}_{4/2})_{\mathbf{z}},$$

   dans laquelle $\mathbf{w}$ = 0 à 20 % en moles, $\mathbf{x}$ = 0 à 99,5 % en moles, $\mathbf{y}$ = 0,5 à 100 % en moles, $\mathbf{z}$ = 0 à 50 % en moles,
   b) de 0,02 à 30 % en poids, par rapport au poids total des copolymérisats, d'une enveloppe B en polydialkylsiloxane à base de motifs de formule

   $$(\mathbf{R}_3\text{SiO}_{1/2})_{\mathbf{w}}(\text{R}_2\text{SiO}_{2/2})_{\mathbf{x}} \cdot (\mathbf{R}_1\text{SiO}_{3/2})_{\mathbf{y}} \cdot (\text{SiO}_{4/2})_{\mathbf{z}},$$

   dans laquelle $\mathbf{w}$ = 0 à 20 % en moles, $\mathbf{x}$ = 0 à 99,5 % en moles, $\mathbf{y}$ = 0,5 à 100 % en moles, $\mathbf{z}$ = 0 à 50 % en moles,
   c) de 0 à 89,45 % en poids, par rapport au poids total des copolymérisats, d'une enveloppe C à base d'organopolymère de monomères à insaturation mono-oléfinique ou polyoléfinique,
   et
   d) de 0,05 à 89,5 % en poids, par rapport au poids total des copolymérisats, d'une enveloppe D à base d'organopolymère de monomères à insaturation mono-oléfinique,

   $\mathbf{R}$ représentant des radicaux alkyle ou alcényle monovalents, identiques ou différents, ayant de 1 à 12 atomes de carbone, des radicaux aryle ou des radicaux hydrocarbonés substitués,
   et les particules présentant une taille moyenne de particule de 10 à 300 nm et une distribution monomodale de tailles de particules,
à condition que dans l'enveloppe en polydialkylsiloxane B, au moins 5 % des radicaux **R** aient des significations qui sont choisies parmi des radicaux alcényle, des radicaux acyloxyalkyle et des radicaux mercaptoalkyle.

2. Copolymérisats élastomères selon la revendication 1, dans lesquels la taille moyenne de particule est au maximum de 200 nm.

3. Copolymérisats élastomères selon la revendication 1 ou 2, dans lesquels la température de transition vitreuse du polymère organopolysiloxane A constituant le noyau est de -60 à -140 °C.

4. Copolymérisats élastomères selon l'une quelconque des revendications 1 à 3, dans lesquels la température de transition vitreuse de l'enveloppe D est de 60 à 140 °C.

5. Procédé pour la préparation de copolymérisats élastomères selon l'une quelconque des revendications 1 à 4, dans lequel, dans une première étape de réaction, on fait réagir dans un procédé de polymérisation en émulsion 0 à 99,5 % en moles d'un silane de formule générale $R_2Si(OR')_2$ ou d'un oligomère de formule $(R_2SiO)_n$ où **n** = 3 à 8, 0,5 à 100 % en moles d'un silane de formule générale $RSi(OR')_3$ et 0 à 50 % en moles d'un silane de formule générale $Si(OR')_4$ et dans cette réaction le polymère organopolysiloxane A constituant le noyau est formé,
dans une deuxième étape de réaction, on ajoute par addition dosée à l'émulsion mise en mouvement du polymère organopolysiloxane A constituant le noyau, dans un procédé de polymérisation en émulsion, des silanes fonctionnels qui sont choisis parmi des silanes de formule générale $RSi(OR')_3$, des silanes fonctionnels de formule générale $R_2Si(OR')_2$ et des siloxanes de faible masse moléculaire de formule générale $(R_2SiO)_n$ où **n** = 3 à 8, en une quantité telle que la proportion de polymérisat polydialkylsiloxane B constituant l'enveloppe représente de 0,02 à 30 % en poids, par rapport au poids total du polymérisat,
et, dans une troisième étape de réaction, dans un procédé de polymérisation en émulsion, on ajoute par addition dosée au polymère organopolysiloxane A constituant le noyau, comportant une enveloppe à base de polymérisat polydialkylsiloxane B, des monomères à insaturation éthylénique en une quantité telle que la proportion de l'enveloppe D à base d'organopolymère de polymères à insaturation mono-oléfinique D représente de 0,05 à 89,5 % en poids, par rapport au poids total du polymérisat,
**R** représentant des radicaux alkyle ou alcényle monovalents, identiques ou différents, ayant de 1 à 12 atomes de carbone, des radicaux aryle ou des radicaux hydrocarbonés substitués et **R**' représentant des radicaux alkyle ayant de 1 à 6 atomes de carbone, des radicaux aryle ou des radicaux hydrocarbonés substitués,
à condition que dans les silanes fonctionnels utilisés dans la deuxième étape de réaction, au moins 5 % des radicaux **R** aient des significations qui sont choisies parmi des radicaux alcényle, des radicaux acyloxyalkyle et des radicaux mercaptoalkyle.

6. Procédé selon la revendication 5, dans lequel la 2ᵉ étape est effectuée à une température de 15 à 90 °C.

7. Procédé selon la revendication 5 ou 6, dans lequel la 2ᵉ étape est effectuée à un pH de 1 à 4.

8. Procédé selon l'une quelconque des revendications 5 à 7, dans lequel, après la 2ᵉ étape, pour l'application d'une enveloppe interne C, on ajoute par addition dosée au polymère organopolysiloxane A constituant le noyau, comportant une enveloppe à base de polymérisat polydialkylsiloxane B, des monomères qui sont choisis parmi des monomères à insaturation mono- et polyéthylénique, en une quantité telle que la proportion de l'enveloppe C à base d'organopolymère de monomères à insaturation mono- ou polyéthylénique représente au maximum 89,45 % en poids, par rapport au poids total du polymérisat.

9. Procédé selon l'une quelconque des revendications 5 à 8, dans lequel, après la 3ᵉ étape, on isole les copolymérisats élastomères à partir de l'émulsion par séchage par atomisation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1101799 A
- DE 1595554
- US 3445415 A
- DE 2421288
- US 3898300 A
- DE 2539572 A
- DE 3629763 A
- EP 231776 A
- US 4690986 A
- EP 246537 A
- DE 3617267 A
- DE 3631539 A
- EP 296402 A
- DE 4040986 A1
- DE 102004047708 A1
- EP 0492376 A2
- WO 03066695 A2
- WO 2006037559 A

**In der Beschreibung aufgeführte Nicht-Patentliteratur**

- **P. Becher.** Encyclopedia of Emulsion Technology. Marcel Dekker, 1983, vol. 1, 71